# EUROPEAN PATENT APPLICATION

(11) **EP 4 807 197 A1**
(43) Date of publication of application: **16.09.2026**
(21) Application number: 25163935.7
(22) Date of filing: 14.03.2025
(51) Int. Cl.: F16B 5/06, F16B 37/08

(54) **CLIP FOR REMOVABLY ATTACHING A FIRST VEHICLE PART TO A SECOND VEHICLE PART, FIRST VEHICLE PART, ASSEMBLY, AND METHOD FOR DISENGAGING AN ASSEMBLY OF A FIRST VEHICLE PART AND OF A SECOND VEHICLE PART**

(71) Applicant: Volvo Car Corporation, 405 31 Göteborg (SE)
(72) Inventor: NILSSON, Ola, 40531 Göteborg (SE)
(74) Representative: Kransell & Wennborg KB

(57) **Abstract**

The disclosure relates to a clip (34) for removably attaching a first vehicle part (28) to a second vehicle part (30). The second part (30) comprises a stud (32) having a finned and/or a threaded lateral surface (36). The clip (34) comprises a base part (38) with an opening (40) for receiving the stud (32). The at least two hooks (42) are arranged on a circumference of the opening (40). Each of the at least two hooks (42) comprises a bendable leg portion (52) and an engagement portion (54) for engaging the lateral surface (36) of the stud (32). Each of the at least two hooks (42) comprises a release interface (58) for disengaging the hook (42) from the stud (32) using a release tool (78). Each of the release interfaces (58) comprises a thrust surface (60) having a surface normal with a component of extension along a middle axis (44) of the opening (40) and with a component of extension perpendicular to the middle axis (44) of the opening (40). Moreover, the disclosure is directed to a first part (28) comprising a clip (34), to an assembly (76) comprising a first part (28) and a second part (30) as well as to a method for disengaging an assembly (76) of a first part (28) and of a second part (30).

## Description

### TECHNICAL FIELD

The present disclosure relates to a clip for removably attaching a first vehicle part to a second vehicle part.

Moreover, the present disclosure relates to a first vehicle part comprising a clip as well as to an assembly comprising a first vehicle part and a second vehicle part.

Furthermore, the present disclosure is directed to a method for disengaging an assembly of a first vehicle part and of a second vehicle part.

### BACKGROUND ART

Clips are widely used in the automotive industry in order to attach parts like cable ducts, ventilation ducts or coverings in an interior or at an exterior of the vehicle to a body of the vehicle.

Due to increased functionalities and consequently due to an increased number of functional components of a vehicle, there is an increasing need to disassemble the above parts from the body of the vehicle in order to be able to reach functional components, e.g. for maintenance.

However, clips that are used to attach the above parts to the body of the vehicle are usually designed to establish a connection between the respective part and the body of the vehicle only once. Thus, if a clip that connects a part to the body of the vehicle is dismounted from the body of the vehicle, the clip often breaks or gets severely damaged. This prevents the clip from being reused when the respective part shall be reconnected to the body of the vehicle after maintenance of the functional component.

### SE:TOP

### SUMMARY

It is therefore an objective of the present disclosure to provide an improved clip for removably attaching a first part to a second part.

The problem is at least partially solved or alleviated by the subject matter of the independent claims of the present disclosure, wherein further examples are incorporated in the dependent claims.

According to a first aspect, there is provided a clip for removably attaching a first vehicle part to a second vehicle part. The second vehicle part comprises a stud having a finned and/or a threaded lateral surface. The clip comprises a base part with an opening for receiving the stud. Moreover, the clip comprises at least two hooks arranged on a circumference of the opening. Each of the at least two hooks comprises a bendable leg portion and an engagement portion for engaging the lateral surface of the stud. The bendable leg portion of each of the at least two hooks is at least partially arranged between the circumference of the opening and the respective engagement portion, such that each engagement portion is configured to be biased towards the lateral surface of the stud by bending the respective leg portion towards a radial outside of the opening. Each of the at least two hooks comprises a release interface for disengaging the hook from the stud using a release tool. Each of the release interfaces comprises a thrust surface having a surface normal with a component of extension along a middle axis of the opening and with a component of extension perpendicular to the middle axis of the opening.

In order to be able to receive the stud, the opening in the base part of the clip is of a size, e.g. a diameter, that is greater than a diameter of the stud that shall be coupled with the clip. The circumference at which the at least two hooks are arranged may be understood as an edge of the opening for receiving the stud. It is understood that the at least two hooks extend from the base part into the same direction. If the clip is mounted to the second vehicle part such that the stud reaches through the opening of the clip, the at least two hooks are bent radially outwards with respect to a middle axis of the opening. The bending is enabled by the bendable leg portion that each of the at least two hooks comprises. It is further understood that if the clip is mounted to the second vehicle part, the stud moves through the opening of the clip along the extension direction. Each of the at least two hooks further comprises an engagement portion that engages with the lateral surface of the stud by mechanical locking, e.g. by engaging into the fins or threads, and/or by friction. Due to the radial outward bending of the at least two hooks, an elastic force is created that biases the engagement portion of the at least two hooks against the lateral surface of the stud. Because of this, a reliable mechanical connection between the clip and the second vehicle part is created.

The release interface that each of the at least two hooks comprises may be actuated by a release tool. In doing so, the at least two hooks are disengaged from the stud, i.e. the mechanical locking and/or the friction created between the engagement portion and the stud is released. Thus, the clip may be released from the stud without damaging any of the at least two hooks and particularly without damaging any engagement portion of any of the at least two hooks. In order to achieve this, the release interface comprises the thrust surface. The thrust surface is a surface that is inclined relative to the middle axis of the opening of the base part of the clip. More specifically, the thrust surface is inclined relative to the middle axis at an angle of between 0° and 90°, wherein the exact values of 0° and 90° are excluded. Thus, the surface normal of the thrust surface has a component of extension along the middle axis of the opening and a component of extension perpendicular to the middle axis of the opening. It is to be noted that the component of extension of the surface normal of the thrust surface that is perpendicular to the middle axis of the opening points towards the middle axis of the opening. In simplified words, this means that a distance between the thrust surface and the middle axis of the opening widens along the extension direction of the at least two hooks from the base part. However, this does not necessarily mean that an inclination of the thrust surface towards the middle axis of the opening is constant along the extension direction of the at least two hooks, e.g. that the thrust surface comprises or is a chamfer of constant inclination. Instead, the thrust surface may also comprise a radius component showing a varying inclination towards the middle axis of the opening. The thrust surface being inclined with respect to the middle axis of the opening has the effect that if a release tool is pushed against the thrust surface along the middle axis, the engagement portions of the at least two hooks get pushed radially outwards such that an engagement between the engagement portion and the stud is released. It is understood that a pushing direction when pushing the release tool against the thrust surface is oriented against the extension direction of the at least two hooks from the base part. Altogether, the release interface allows to reliably disengage the clip from the stud of the second vehicle part.

In an example, the first vehicle part may be or comprise a cable duct, a ventilation duct, a cover, or the like. The clip may be mechanically connected to the first vehicle part. The second vehicle part may be or comprise a body of a vehicle, another cover or another structural component of a vehicle. The stud may be permanently connected to the second vehicle part, e.g. because the stud is integrally formed with the second vehicle part, by welding or by screwing of the stud to the second vehicle part. The stud may comprise a cylindrical base shape that has a finned and/or a threaded structure on its lateral surface.

In an example, the opening of the base part has a substantially oblong cross-section. Alternatively, the opening of the base part has a substantially circular cross-section. In case of a substantially oblong cross-section of the opening, the at least two hooks of the clip are arranged on either of the two parallel sides of the oblong cross-section. The at least two hooks may extend along a full length of the two parallel sides of the oblong cross-section or along a portion of the length of the two parallel sides of the oblong cross-section. In the latter case, the at least two hooks arranged on either of the two parallel sides of the oblong cross-section may face each other such that they are mirrored with respect to a longitudinal middle axis of the oblong cross-section. In all cases of an opening having an oblong cross-section, the stud, if inserted into the opening, may move relative to the clip in a direction of the longitudinal middle axis of the oblong cross-section even though the engagement portions of the at least two hooks engage the lateral surface of the stud. This is possible because of the geometric freedom or play between the opening having an oblong cross-section and the stud, which may comprise a circular cross-section that is smaller than a longitudinal extension of the opening having an oblong cross-section. It is understood that the same considerations also apply if the opening of the base part is curved, e.g. if it comprises the shape of a ring segment such as a circular ring segment. An opening having an oblong cross-section allows to reliably connect the clip to a stud of the second vehicle part but at the same time allow a certain relative movement between the clip and the second vehicle part which may be used to compensate for tolerances.

In case of a substantially circular cross-section, the diameter of the stud may be smaller than a diameter of the opening in the base part such that the stud fits through the opening. If inserted into the opening, the stud may not be able to move in any radial direction with respect to the clip. In other words, the clip may be fixed to the stud without any degree of freedom of movement by engaging the engagement portions of the at least two hooks with the stud. This allows for a reliable and mechanically stable connection between the clip and the stud.

In an example, the clip comprises at least three hooks arranged on the circumference of the opening. Using three or more hooks arranged on the circumference of the opening ensures a particularly firm grip of the stud by the at least three hooks of the clip. This is because the elastic forces created at each hook when its respective leg portion is bent towards the radial outside of the opening comprise force components that restrain the stud in each direction that is perpendicular to the middle axis of the opening, i.e. in each radial direction. By contrast, if only two hooks are used, the stud may slide relative to the two hooks even though the engagement portions of the two hooks engage with the lateral surface of the stud. This may however be of particular advantage if such a sliding is desired, e.g. in case of an opening having an oblong cross-section or in case of an opening that comprises the shape of a ring segment.

In an example, the at least two hooks are evenly distributed along the circumference. This may be understood in that center points of the at least two hooks are arranged at equal angles relative to each other with respect to the middle axis of the opening. Additionally or alternatively, this may be understood in that center points of the at least two hooks are arranged at equal distances with respect to each other. Equal angles and equal distances mutually define each other in case of a circular shape of the opening in the base part of the clip. In this context, a center point of a hook of the clip is a geometric center of the respective hook. Having the at least two hooks evenly distributed along the circumference of the opening maintains an effective grip of the at least two hooks on the stud, more precisely, of the respective engagement portions on the lateral surface of the stud. This is because elastic forces created due to biasing of the at least two hooks against the stud are oriented relative to each other such that the stud is not pushed in any direction perpendicular to the middle axis. In other words, the elastic forces cancel each other out at the stud. Also, each hook that has its engagement portion engage with the stud may be deformed by the same amount. This causes a defined position of the stud within the opening, i.e. in a center point or on a longitudinal middle axis of the opening. If a position of the stud is exactly defined by the clip, also a position of the second vehicle part with respect to the clip is exactly defined. It is understood that the same applies if at least three, i.e. three or more, hooks are evenly distributed along the circumference.

In an example, the release interface further comprises a holding surface for holding the release tool. The holding surface has a surface normal with a component of extension perpendicular to the middle axis. The component of extension perpendicular to the middle axis may be greater than the component of extension perpendicular to the middle axis of the normal of the thrust surface provided that equal lengths of the respective surface normal are assumed (e.g. unit vectors as surface normals). In an example, the surface normal of the holding surface may be perpendicular to the middle axis of the opening, i.e. the holding surface may be parallel to the middle axis. This may be in particular the case in a condition in which the release tool is held by the holding surface. The holding surface may be arranged adjacent to the thrust surface but closer to the base part of the clip than the thrust surface. The holding surface has the effect that once an edge of the release tool is pushed in the direction of the middle axis past the thrust surface, the release tool is held between the holding surfaces of the release interfaces of the at least two hooks without creating a force resisting the pushing of the release tool in the direction of the middle axis. Additionally or alternatively, no resulting force may be applied to the release tool that presses the release tool away from the release interface. In this context, it is noted that no resulting force may imply that there is a force created at an interface between the holding surface and the release tool due to the biasing of the at least two hooks that comprises a force component that presses the release tool away from the release interface. However, in this case, there may be a frictional force created at the interface between the holding surface and the release tool due to the biasing that balances out said force component. The holding surface has the effect that a release tool is held in place by the hooks of the clip. The release tool does not need to be held by an operator. Instead, the operator can concentrate on manipulating the clip in order to dismount the clip from the stud of the second vehicle part.

It is noted that the holding surface does not necessarily need to be straight. In an example, it is conceivable that the holding surface comprises a locking element such as a bulge or a recess that interlocks with a recess or a bulge in the release tool once the release tool is pushed along the holding surface by a defined length.

In an example, the thrust surface is arranged radially outward with respect to the holding surface. In this context, radially outward refers to the middle axis of the opening. Thus, the thrust surface is arranged at a greater distance from the middle axis of the opening than the holding surface. Due to this, bending of the leg portions of the at least two hooks of the clip is increased as the release tool is pushed along the middle axis and against the thrust surface and further along the holding surface. This creates particularly high elastic forces that clamp the release tool between the holding surfaces of the release interfaces of the at least two hooks. Thus, the release tool may be secured by the holding surfaces in a particularly reliable manner. An operator or maintenance personnel may remove its grip from the release tool and can concentrate on removing the clip from the stud of the second component.

In an example, the release interface comprises an abutment surface for abutting the release tool if held by the holding surface. The abutment surface limits a length by which the release tool may be moved and/or pushed along the holding surface, i.e. along the middle axis, by providing an abutment for the release tool. Thus, it may be prevented that the release tool contacts the second vehicle part, which comprises the stud. Unintended scratching of the second vehicle part by the release tool may be avoided. Also, creating a short circuit between an electrically charged component of the vehicle and the second vehicle part from contact with the release tool may be avoided. Moreover, the abutment surface may prevent the release tool from being pushed too far along the holding surface such that the locking element on the release tool, such as a bulge or a recess, misses a corresponding element, such as a recess or a bulge, in the holding surface. Hence, achieving a firm grip of the holding surface on the release tool may be facilitated.

In an example, the engagement portion comprises an engagement edge configured to engage the lateral surface of the stud. The engagement edge may particularly comprise a pointed shape for an improved engagement with the lateral surface of the stud. The pointed shape may comprise a shape of a triangle, of a rectangle, of a square or of a trapeze. Additionally or alternatively, the engagement edge may comprise a negative of the finned and/or threaded lateral surface of the stud. The engagement edge improves engagement of the engagement portions of the at least two hooks of the clip with the start of the second vehicle part. In other words, the engagement edge prevents the clip from loosening from the stud if no release tool is applied, i.e. if a disengagement of the clip from the stud is unintended.

In an example, the engagement edge comprises the abutment surface or the abutment surface comprises the engagement edge. Additionally or alternatively, the engagement edge may be the same portion or may at least be part of the same portion of a hook as the abutment surface. Due to such integral design, a number of components and/or portions of the clip is reduced, thereby making its production and use simple and reliable. Moreover, such a configuration renders the clip compact.

In an example, the clip further comprises a first stiffening rib arranged at least partially on a radial outer side of at least one hook and/or arranged at least partially on the base part. This means that the first stiffening rib may be arranged on a side of at least one hook that faces away from the middle axis of the opening in the base part. The first stiffening rib may connect said side of at least one hook to the base part. More precisely, the first stiffening rib may connect said side of at least one hook to a portion of the base part from which the at least one hook does not directly extend. Due to this, a bending stiffness of the at least one hook is increased. Thus, if the engagement portion of the at least two hooks of the clip engage with the stud, the elastic forces that bias the at least two hooks against the stud are increased. Consequently, the engagement between the at least two hooks and the stud may resist higher forces that may act to release the clip from the stud. In an example, all of the hooks of the clip comprise said first stiffening rib. This may increase a strength of the mechanical locking and/or the friction between the engagement portions of the hooks and the stud even more. By adjusting the dimensions of the first stiffening rib, e.g. a thickness and/or a length that supports the hook, an extent of the additional stiffening of the at least one hook may be adjusted.

In an example, the clip further comprises a protection collar extending from the base part in an extension direction substantially parallel to the middle axis. The extension direction of the protection collar from the base part and the extension direction of the at least two hooks from the base part are the same. The protection collar is arranged radially outside the opening in the base part. The at least two hooks and the protection collar extend on the same side of the base part. The protection collar may be arranged at a radial distance from the middle axis of the opening that is greater than a radial distance of the at least two hooks from said middle axis. Moreover, the protection collar may be integrally formed with the base part. In other words, the protection collar and the at least two hooks of the clip may be integrally formed with the base part. The protection collar may shield the at least two hooks from unintended mechanical impact, e.g. from a tool drop during maintenance of a component of the vehicle. In particular, the protection collar may prevent objects from interacting with the at least two hooks in a way that would loosen the engagement between the engagement portion of the at least two hooks and the stud. Moreover, the protection collar may prevent objects from damaging one or more of the hooks of the clip. This is particularly relevant if the clip is used in a portion of the vehicle that is exposed to an environment, especially to a road surface on which the vehicle is traveling. Such a portion may be an underside of the vehicle body.

In an example, a height of the protection collar is larger than a height of the at least two hooks. The height of the protection collar and the height of the at least two hooks are measured with respect to the base part and along a direction parallel to the middle axis. The height of the protection collar being larger than the height of the at least two hooks enhances the above described shielding capabilities of the protection collar of the at least two hooks from undesired mechanical impact. It is noted that the height of the protection collar being larger than the height of the at least two hooks does not interfere with an application of a release tool for releasing the clip from the stud because they release tool is pushed against the thrust surfaces of the release interfaces of the at least two hooks in a direction along the middle axis of the opening of the base part of the clip. This pushing direction of the release tool is not hindered or obstructed by the protection collar.

In an example, the protection collar comprises one or more second stiffening ribs. The one or more second stiffening ribs may be arranged at least partially on a radial outer side of the protection collar and/or arranged at least partially on the base part. This means that the second stiffening rib may be arranged on a side of the protection collar that faces away from the middle axis of the opening in the base part. The second stiffening rib may connect said side of the protection collar to the base part. More precisely, the second stiffening rib may connect said side of the protection collar to a portion of the base part from which the protection collar does not directly extend. Due to this, a stiffness and/or a strength of the protection collar is increased, thereby enhancing shielding capabilities of the protection collar. By adjusting the dimensions of the second stiffening ribs, e.g. a thickness and/or a length that supports the protection collar, an extent of the additional stiffening and/or strengthening of the protection collar may be modified.

According to a second aspect, there is provided a first vehicle part comprising a clip according to the first aspect. The base part and the hooks are integrally formed with the first vehicle part. By providing such a first vehicle part, the first vehicle part may be attached to a second vehicle part that comprises a stud. The first vehicle part may be or comprise a cable duct, a ventilation duct, a cover, or the like. The second vehicle part may be or comprise a body of a vehicle, another cover or an otherwise structural component of a vehicle. The stud is permanently connected to the second vehicle part, e.g. because the stud is integrally formed with the second vehicle part, by welding or by screwing of the stud to the second vehicle part. Each of at least two hooks of the clip of the first vehicle part comprises an engagement portion that engages with a lateral surface of the stud by mechanical locking and/or by friction. Due to a radial outward bending of the at least two hooks upon insertion of the stud into an opening in the base part of the clip, an elastic force is created that biases an engagement portion of the at least two hooks against the lateral surface of the stud. Due to this, a mechanical connection between the first vehicle part and the second vehicle part is created. The release interface that each of the at least two hooks comprises may be actuated by a release tool. In doing so, the at least two hooks are disengaged from the stud, i.e. the mechanical locking and/or the friction created between the engagement portion and the stud is released. Thus, the first vehicle part may be released from the second vehicle part without damaging any of the at least two hooks and particularly without damaging any engagement portion of any of the at least two hooks.

According to a third aspect, there is provided an assembly comprising a first vehicle part and a second vehicle part. The first vehicle part comprises a clip according to the first aspect. The second vehicle part comprises a stud having a finned and/or a threaded lateral surface. The at least two hooks of the clip engage the finned and/or the threaded lateral surface of the stud such that the first vehicle part and the second vehicle part are connected to one another. Each of at least two hooks of the clip of the first vehicle part comprises an engagement portion that engages with a lateral surface of the stud by mechanical locking and/or by friction. Due to a radial outward bending of the at least two hooks upon insertion of the stud into an opening in a base part of the clip, an elastic force is created that biases the engagement portion of the at least two hooks against the lateral surface of the stud. Due to this, a reliable and stable mechanical connection between the first and the second vehicle part is created. The release interface that each of the at least two hooks comprises may be actuated by a release tool. In doing so, the at least two hooks are disengaged from the stud, i.e. the mechanical locking and/or the friction created between the engagement portion and the stud is released. Thus, the first vehicle part may be released from the second vehicle part without damaging any of the at least two hooks and particularly without damaging any engagement portion of any of the at least two hooks.

According to a fourth aspect, there is provided a method for disengaging an assembly of a first vehicle part and of a second vehicle part according to the third aspect. The method comprises pushing a release tool against a thrust surface of a release interface of the clip, wherein the release tool is pushed along a middle axis of the opening. By pushing the release tool against the thrust surface, bendable leg portions of at least two hooks of the clip are bent into a radially outward direction with respect to a middle axis of an opening of a base part of the clip. This causes engagement portions of the at least two hooks to move away from and disengage from a finned and/or a threaded lateral surface of a stud that is attached to the second vehicle part. In doing so, the at least two hooks are disengaged from the stud, i.e. the mechanical locking and/or the friction created between the engagement portion and the stud is released. Thus, the first vehicle part may be released from the second vehicle part without damaging any of the at least two hooks and particularly without damaging any engagement portion of any of the at least two hooks.

It should be noted that the above examples may be combined with each other irrespective of the aspect involved. Accordingly, the method may be combined with structural features of the clip, of the first vehicle part or of the assembly, and, likewise, the clip, the first vehicle part or the assembly may be combined with features described above with regard to the method. Also, structural features of the clip, of the first vehicle part or of the assembly may be combined with each other.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle comprising an assembly according to the present disclosure, wherein the assembly comprises a first vehicle part according to the present disclosure and of a vehicle second part, wherein the first vehicle part is a cable duct,
- Figure 2: shows a more detailed, perspective view of a detail I of the first vehicle part of Figure 1 comprising a clip according to the present disclosure,
- Figure 3: shows a sectional view of the clip along a line A-A in Figure 2 and a second vehicle part comprising a stud that the clip shall be connected to,
- Figure 4: shows the clip of Figures 2 and 3 and the second vehicle part of Figure 3 in a connected state,
- Figure 5: shows a release tool that is pushed against a thrust surface of a release interface of the clip of Figures 2 to 4 for disconnecting the clip from the second vehicle part of Figures 3 and 4,
- Figure 6: shows the release tool abutting against an abutment portion of the clip of Figures 2 to 5 and an engagement edge of the clip disengaged from a lateral surface of the stud of the second vehicle part of Figures 3 to 5, and
- Figure 7: shows the clip of Figures 2 to 6 being in a state removed from the stud of the second vehicle part of Figures 3 to 6.

### DETAILED DESCRIPTION

The Figures are merely schematic representations and serve only to illustrate examples of the disclosure. Identical or equivalent elements are in principle provided with the same reference signs.

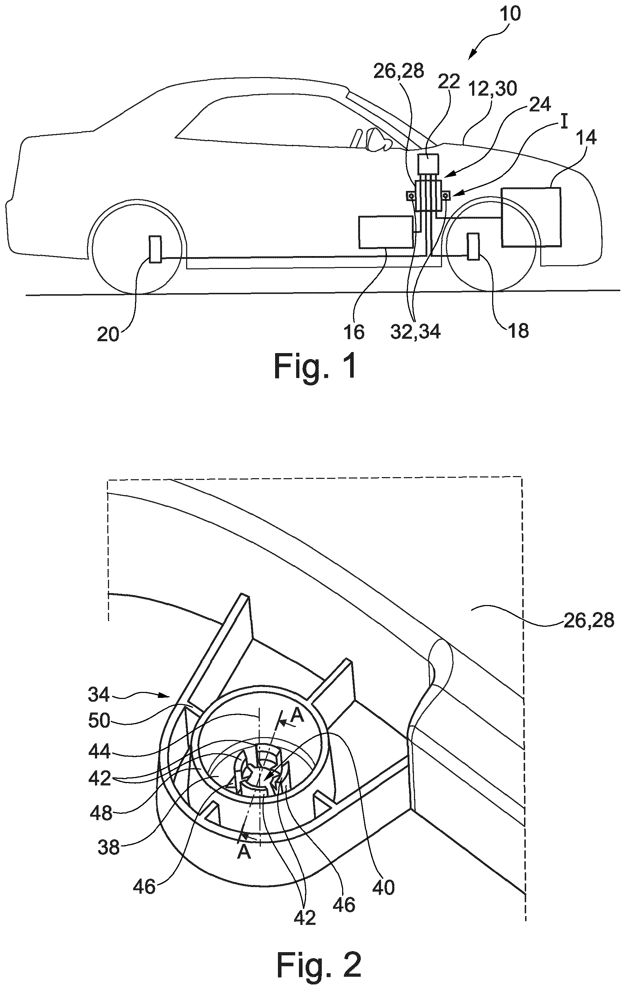

Figure 1 shows a vehicle 10.

The vehicle 10 comprises a body 12 of the vehicle 10, an engine 14, a transmission 16, a front brake 18 and a rear brake 20.

The vehicle 10 further comprises a control unit 22 for controlling vehicle dynamics while driving.

In order to do so, the control unit 22 is communicatively connected to the engine 14, to the transmission 16, to the front brake 18 and to the rear brake 20 by a cable harness 24.

The cable harness 24 is held in place by a cable duct 26, which may be referred to as a first vehicle part 28. The cable duct 26 is connected to the body 12 of the vehicle 10, which may be referred to as a second vehicle part 30.

The body 12 of the vehicle 10 comprises two studs 32 that are welded to the body 12 of the vehicle 10. The cable duct 26 comprises two clips 34 that are integrally formed with the cable duct 26. The connection between the cable duct 26 and the body 12 of the vehicle 10 is established by the two clips 34 engaging with a lateral surface 36 of the studs 32.

Figure 2 shows a portion of the cable duct 26 that comprises one of the two clips 34. This portion is indicated as detail I in Figure 1.

Since both clips 34 of the cable duct 26 are identical, only one of them will be explained in detail in the following.

The clip 34 comprises a base part 38. The base part 38 may also be referred to as a base plate. In the present example, the base part 38 comprises a circular opening 40. However, other shapes of the opening 40 in the base part 38 such as a shape of an oblong or a shape of a ring segment, in particular a shape of a circular ring segment are also possible.

Four hooks 42 of the clip 34 extend in an extension direction away from the base part 38. The four hooks 42 are arranged on a circumference of the opening 40 in an even distribution. In the present example, this means that with respect to a middle axis 44 of the opening 40, neighboring hooks 42 are arranged at the same angle of 90° relative to one another. Also, neighboring hooks 42 are arranged at the same distance from one another.

On a radial outer side with respect to the middle axis 44, each hook 42 comprises a first stiffening rib 46 that connects a backside of each hook 42 to the base part 38. Due to the first stiffening ribs 46, a bending stiffness of the hooks 42 is increased. The increase in bending stiffness may be adjusted by modifying a thickness of the first stiffening ribs 46. For the same purpose, a length of the backside of each hook 42 that is directly supported by a first stiffening rib 46 may be modified.

The four hooks 42 are protected by a protection collar 48. The protection collar 48 extends away from the base part 38 into the same extension direction as the four hooks 42. In other words, the four hooks 42 and the protection collar 48 are arranged on the same side of the base part 38. A height of the protection collar 48 measured along the extension direction is greater than a height of the four hooks 42 of the clip 34 also measured along the extension direction.

The protection collar 48 comprises a circular shape with a diameter that is greater than a furthest distance between any of the four hooks 42. The opening 40 in the base part 38 and the circular protection collar 48 share the same middle axis 44.

On a radial outer side with respect to the middle axis 44, the protection collar 48 comprises four second stiffening ribs 50 that connects an outside of the protection collar 48 to the base part 38. Due to the second stiffening ribs 50, a strength and/or stiffness of the protection collar 48 is increased. The increase in strength and/or stiffness may be adjusted by modifying a thickness of the second stiffening ribs 50. For the same purpose, a length of the outside of the protection collar 48 that is directly supported by a second stiffening rib 50 may be modified. Still for the same purpose, a number of second stiffening ribs 50 may be modified.

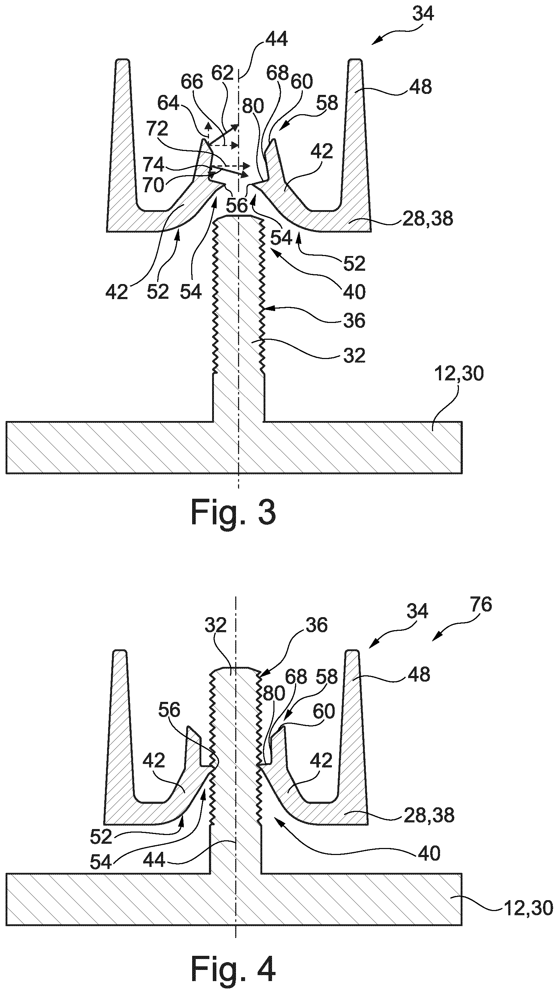

In an upper portion of Figure 3, a cross-sectional view of the clip 34 of Figure 2 is shown. In a bottom portion of Figure 3, the body 12 of the vehicle 10, which comprises the stud 32, is schematically shown. The clip 34 and the body 12 of the vehicle 10 are not yet assembled to one another.

The stud 32 comprises a cylindrical base shape that is welded to the body 12 of the vehicle 10. A cylinder mantle surface of the base shape, i.e. the lateral surface 36 of the stud 32, comprises a thread.

The opening 40 in the base part 38 is configured to receive the stud 32. However, the stud 32 is not screwed into the opening 40. Instead, the stud 32, which comprises a smaller diameter than the circular opening 40 in the base part, may reach through the opening 40 such that the thread on its lateral surface 36 engages with the clip 34. Such an engaged state is shown in Figure 4.

Each hook 42 of the clip comprises a leg portion 52. The leg portion 52 of a hook 42 is arranged between the circumference of the opening 40 and an engagement portion 54 of the hook 42. Compared to an unassembled state, the leg portions 52 of the hooks 42 are bent radially outside with respect to the middle axis 44 due to the stud 32 that reaches through the opening 40 and that is received by the hooks 42.

The engagement portion 54 of a hook 42 comprises an engagement edge 56 that engages with the lateral surface 36 of the stud 32, more precisely with the thread thereon. In the present example, the engagement edge 56 comprises a pointed triangular shape. The engagement edge 56 is pressed into depressions in the thread by elastic forces that are created due to the radial outward bending of the leg portion 52 of the respective hook 42 that results from the respective hook 42 receiving the stud 32. In other words, it may be said that the engagement portion 54 of the respective hook 42 is biased towards the lateral surface 36 of the stud 32.

Each hook 42 of the clip 34 further comprises a release interface 58 for disengaging the clip 34 from the stud 32.

The release interface 58 comprises a thrust surface 60 at a free end of the hook 42.

The thrust surface 60 is inclined relative to the middle axis 44 of the opening 40. In the present example, the thrust surface 60 is formed as a chamfer.

A surface normal 62 of the thrust surface is indicated by a solid arrow. It is assumed that the surface normal 62 of the chamfer is of a unit length. By dotted arrows, components of extension of the surface normal 62 parallel to the middle axis 44 and perpendicular to the middle axis 44 are indicated. Thus, the surface normal 62 of the thrust surface 60 comprises a component 64 of extension along the middle axis 44 of the opening 40 and a component 66 of extension perpendicular to the middle axis 44 of the opening 40. Still, the thrust surface 60 faces towards the middle axis 44. It is noted that this is true for a non-engaged state of the clip 34 with the stud 32 (see Figure 3) and for an engaged state of the clip 34 with the stud 32 (see Figure 4).

It is noted that the thrust surface 60 does not necessarily need to be straight like, for example, a chamfer. The thrust surface 60 could also comprise a radius (see dashed line in Figure 3), could be composed of differently inclined portions and/or could comprise a locking element such as a bulge or a recess.

The release interface 58 further comprises a holding surface 68 that is adjacent to the thrust surface 60.

A surface normal 70 of the holding surface 68 is indicated by a solid arrow. It is assumed that the surface normal 70 of the holding surface 68 is of a unit length. By dotted arrows, components of extension of the surface normal parallel 72 to the middle axis and perpendicular 74 to the middle axis 44 are indicated. It can be observed that the component 74 of extension of the surface normal of the holding surface perpendicular to the middle axis 44 is longer than the component 66 of extension of the surface normal of the thrust surface perpendicular to the middle axis 44. In simplified words, the holding surface 68 is inclined relative to the middle axis 44 by a smaller angle than the thrust surface 60. It is noted that this is true for a non-engaged state of the clip 34 with the stud 32 (see Figure 3) and for an engaged state of the clip 34 with the stud 32 (see Figure 4).

The holding surface 68 is arranged radially inward relative to the thrust surface 60 with respect to the middle axis 44. This implies that the thrust surface 60 is arranged radially outward relative to the holding surface 68 with respect to the middle axis 44. In simplified words, the holding surface 68 is arranged closer to the middle axis 44 than the thrust surface 60.

In the following, a method for disengaging an assembly of a first vehicle part 28 and of the second vehicle part 30 will be explained in connection with the example of Figures 3 to 7.

Figure 3 shows the first vehicle part 28 (here: the cable duct 26 comprising the clip 34) not yet assembled to the second vehicle part 30 (here: the body 12 of the vehicle 10 comprising the stud 32).

In Figure 4, it is shown that the stud 32 is inserted into the opening 40 in the base part 38 of the clip 34 such that it is received by the hooks 42 of the clip 34. The engagement portions 54 of the hooks 42 engage with the threaded lateral surface 36 of the stud 32. Thus, an assembly 76 of a first vehicle part 28 and of a second vehicle part 30 is created. This means that in Figure 4, the first vehicle part 28 and the second vehicle part 30 are mechanically connected to one another.

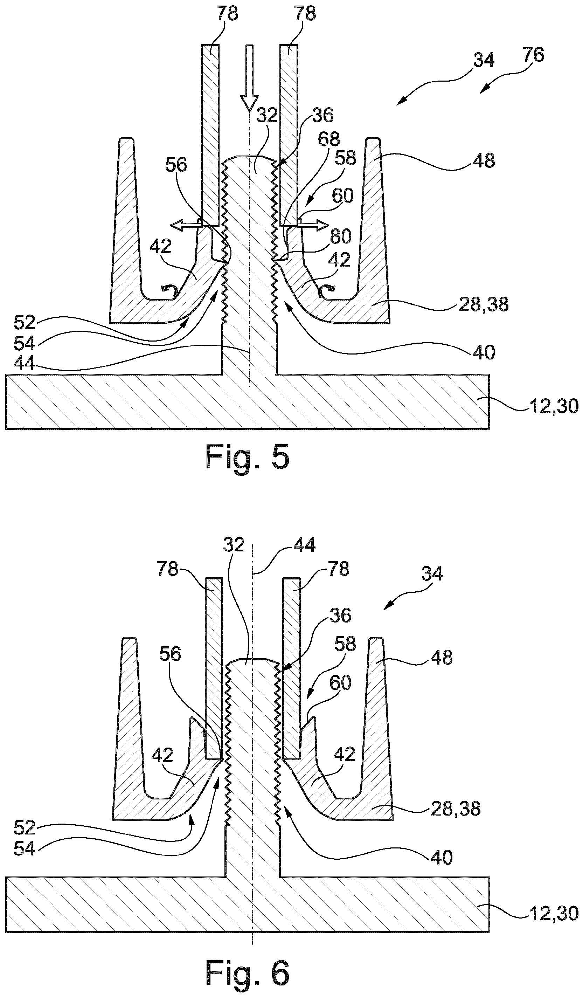

In Figure 5, a method step S1 of pushing a release tool 78 against the thrust surface 60 of the release interface 58 of the clip 34 is shown.

The release tool 78 is a cylindrical tool. It is conceivable that the release tool 78 is, for example, a piece of a pipe, a hollow rod or a socket of a torque wrench.

An outer diameter of the release tool 78 is larger than a distance of opposing holding surfaces 68 of different hooks 42 of the clip 34. In combination with the inclination of the thrust surface 60 with respect to the middle axis 44, the leg portions 52 of the hooks 42 are bent radially outwards with respect to the middle axis 44 as the release tool 78 is moved in a direction towards the thrust surface 60 along the middle axis 44.

Due to the bending, the distance between opposing engagement portions 54 of different hooks 42 is widened. As a consequence, the engagement edges 56 of the respective engagement portions 54 disengage with the thread on the lateral surface 36 of the stud 32. Such a state is shown in Figure 6.

Figure 6 further shows that the release tool 78 may be moved further down into the direction of the body 12 of the vehicle 10 until it reaches an abutment surface 80 of the release interface 58. The abutment surface 80 prevents the release tool 78 from being pushed further along the holding surface 68.

In this abutted state, the release tool 78 is held in place between holding surfaces 68 of opposing hooks 42 of the clip 34. Due to the bending of the leg portions 52 of the hooks 42 that is induced by the release tool 78, an elastic force is exercised onto an outer surface of the release tool such that the release tool is clamped between opposing holding surfaces 68. This enables operating personnel to release a grip from the release tool 78 without risking the release tool 78 to fall out of the clip 34.

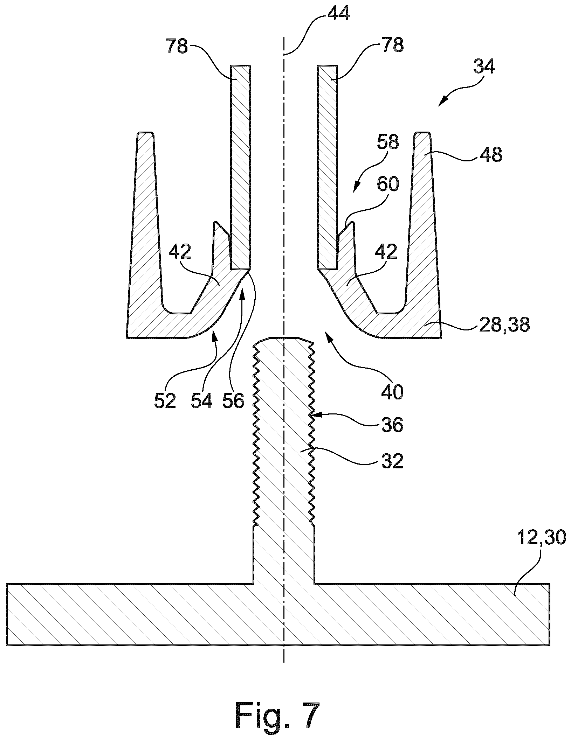

Instead, operating personnel can concentrate on separating the first vehicle part 28 from the second vehicle part 30. This is shown in Figure 7, where the clip 34 is removed from the stud 32 without damaging the clip 34, in particular without damaging any of the hooks 42 and further in particular without damaging any of the engagement portions 54 or engagement edges 56 of the hooks 42 of the clip 34.

After having removed the clip 34 from the stud 32, the release tool 78 may be removed from the clip 34. Thereupon, the hooks 42 of the clip 34 bend radially inward in an elastic fashion into the initial position as shown in Figure 3. Thus, the clip 34 can be used again to connect the first vehicle part 28 to the second vehicle part 30 (see Figure 4). Also, the reused clip 34 may be disengaged from the stud 32 of the second vehicle part 30 by the steps shown in Figures 5 to 7.

All in all, the same clip 34 may be used to repeatedly establish a connection between the first vehicle part 28 and the second vehicle part 30, e.g. before and after performing maintenance on a component of the vehicle 10 that requires the first vehicle part 28 to be temporarily removed. This allows the clip 34 to the integrally formed with the first vehicle part 28, i.e. the hooks 42 and the base part 38 are integrally formed with the first vehicle part 28.

It is noted that even though the clip 34 has been explained in connection with a cable duct 26 mounted onto a vehicle body 12 in the above examples, the use of the clip 34 is not limited thereto.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: body of vehicle
- 14: engine
- 16: transmission
- 18: front brake
- 20: rear brake
- 22: control unit
- 24: cable harness
- 26: cable duct
- 28: first vehicle part
- 30: second vehicle part
- 32: stud
- 34: clip
- 36: lateral surface
- 38: base part
- 40: opening
- 42: hook
- 44: middle axis
- 46: first stiffening rib
- 48: protection collar
- 50: second stiffening rib
- 52: leg portion
- 54: engagement portion
- 56: engagement edge
- 58: release interface
- 60: thrust surface
- 62: surface normal of thrust surface
- 64: component of extension of surface normal of thrust surface parallel to middle axis
- 66: component of extension of surface normal of thrust surface perpendicular to middle axis
- 68: holding surface
- 70: surface normal of holding surface
- 72: component of extension of surface normal of holding surface parallel to middle axis
- 74: component of extension of surface normal of holding surface perpendicular to middle axis
- 76: assembly of first vehicle part and of second vehicle part
- 78: release tool
- 80: abutment surface

## Claims

1. A clip (34) for removably attaching a first vehicle part (28) to a second vehicle part (30), wherein the second vehicle part (30) comprises a stud (32) having a finned and/or a threaded lateral surface (36),
the clip (34) comprising a base part (38) with an opening (40) for receiving the stud (32), and at least two hooks (42) arranged on a circumference of the opening (40), wherein each of the at least two hooks (42) comprises a bendable leg portion (52) and an engagement portion (54) for engaging the lateral surface (36) of the stud (32), wherein the bendable leg portion (52) of each of the at least two hooks (42) is at least partially arranged between the circumference of the opening (40) and the respective engagement portion (54), such that each engagement portion (54) is configured to be biased towards the lateral surface (36) of the stud (32) by bending the respective leg portion (52) towards a radial outside of the opening (40),
wherein each of the at least two hooks (42) comprises a release interface (58) for disengaging the hook (42) from the stud (32) using a release tool (78), and
wherein each of the release interfaces (58) comprises a thrust surface (60) having a surface normal (62) with a component (64) of extension along a middle axis (44) of the opening (40) and with a component (66) of extension perpendicular to the middle axis (44) of the opening (40).

2. The clip (34) according to claim 1, wherein the opening (40) of the base part (38) has a substantially oblong cross-section or wherein the opening (40) of the base part (38) has a substantially circular cross-section.

3. The clip (34) according to claim 1 or 2, wherein the clip (34) comprises at least three hooks (42) arranged on the circumference of the opening (40).

4. The clip (34) according to any of the preceding claims, wherein the at least two hooks (42) are evenly distributed along the circumference.

5. The clip (34) according to any of the preceding claims, wherein the release interface (58) further comprises a holding surface (68) for holding the release tool (78), the holding surface (68) having a surface normal (70) with a component (74) of extension perpendicular to the middle axis (44).

6. The clip (34) according to claim 5, wherein the thrust surface (60) is arranged radially outward with respect to the holding surface (68).

7. The clip (34) according to claim 5 or 6, wherein the release interface (58) comprises an abutment surface (80) for abutting the release tool (78) if held by the holding surface (68).

8. The clip (34) according to any of the preceding claims, wherein the engagement portion (54) comprises an engagement edge (56) configured to engage the lateral surface (36) of the stud (32).

9. The clip (34) according to any of the preceding claims, further comprising a first stiffening rib (46) arranged at least partially on a radial outer side of at least one hook (42) and/or arranged at least partially on the base part (38).

10. The clip (34) according to any of the preceding claims, further comprising a protection collar (48) extending from the base part (38) in an extension direction substantially parallel to the middle axis (44), wherein the extension direction of the protection collar (48) from the base part (38) and an extension direction of the at least two hooks (42) from the base part (38) are the same, and
wherein the protection collar (48) is arranged radially outside the opening (40) in the base part (38).

11. The clip (34) according to claim 10, wherein a height of the protection collar (48) is larger than a height of the at least two hooks (42), wherein the height of the protection collar (48) and the height of the at least two hooks (42) are measured with respect to the base part (38) and along a direction parallel to the middle axis (44).

12. The clip (34) according to any of claims 10 or 11, wherein the protection collar (48) comprises one or more second stiffening ribs (50).

13. A first vehicle part (28) comprising a clip (34) according to any of the preceding claims, wherein the base part (38) and the hooks (42) are integrally formed with the first vehicle part (28).

14. An assembly (76) comprising a first vehicle part (28) and a second vehicle part (30),
wherein the first vehicle part (28) comprises a clip (34) according to any of claims 1 to 12,
wherein the second vehicle part (30) comprises a stud (32) having a finned and/or a threaded lateral surface (36),
wherein the at least two hooks (42) of the clip (34) engage the finned and/or the threaded lateral surface (36) of the stud (32) such that the first vehicle part (28) and the second vehicle part (30) are connected to one another.

15. A method for disengaging an assembly (76) of a first vehicle part (28) and of a second vehicle part (30) according to claim 14, the method comprising:
pushing a release tool (78) against a thrust surface (60) of a release interface (58) of the clip (34) (S1), wherein the release tool (78) is pushed along a middle axis (44) of the opening (40).
